(19) Europäisches Patentamt
European Patent Office
Office européen des brevets

(11) Veröffentlichungsnummer: **0 155 909**
**B1**

(12) # EUROPÄISCHE PATENTSCHRIFT

(45) Veröffentlichungstag der Patentschrift: **03.08.88**

(51) Int. Cl.⁴: **C 07 F 9/65**, C 08 K 5/51

(21) Anmeldenummer: **85810073.8**

(22) Anmeldetag: **22.02.85**

(54) **Neue Polyalkylpiperidinderivate von cyclischen Phosphiten.**

(30) Priorität: **29.02.84 CH 964/84**

(43) Veröffentlichungstag der Anmeldung:
**25.09.85 Patentblatt 85/39**

(45) Bekanntmachung des Hinweises auf die Patenterteilung:
**03.08.88 Patentblatt 88/31**

(84) Benannte Vertragsstaaten:
**BE DE FR GB IT NL**

(56) Entgegenhaltungen:
**DE - A - 2 621 870**
**DE - A - 2 656 999**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Rasberger, Michael, Dr., Waltersgrabenweg 6, CH-4125 Riehen (CH)**
Erfinder: **Hofmann, Peter, Dr., Lerchenstrasse 57, CH-4059 Basel (CH)**
Erfinder: **Meier, Hans Rudolf, Dr., Ch. des Epinettes 12, CH-1723 Marly (CH)**
Erfinder: **Dubs, Paul, Dr., Route des Pralettes 25, CH-1723 Marly (CH)**

**EP 0 155 909 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Polyalkylpiperidinderivate von cyclischen Phosphiten, ihre Herstellung und ihre Verwendung als Stabilisatoren für organische Polymere. Es handelt sich dabei um P-Piperidylaminoderivate von 1,3,2-Dioxaphosphorinanen, von 1,3,2-Dioxaphospholanen, von 2,4,8,10-Tetraoxa-3,9-diphospha[5,5]spiroundecan und von 1,3-Bis-[1,3,2-dioxaphosphorinan-5-yl]-2-oxapropan.

Es ist bekannt, dass gewisse cyclische Phosphite ebenso wie Triarylphosphite gute Verarbeitungsstabilisatoren für Polymere sind. Sie schützen die Polymeren während ihrer thermischen Verarbeitung gegen thermisch-oxidative Schädigungen wie Molekulargewichtsabbau, Vernetzung oder Verfärbung. Oft werden sie für diese Zwecke in Kombination mit Antioxidantien vom Typ der sterisch gehinderten Phenole verwendet, wobei die Phosphite als Costabilisatoren bereits in kleinen Mengen synergistisch wirken können. Ein in der Praxis verwendetes cyclisches Phosphit ist beispielsweise das P,P'-Bis(2,4-di-tert.butylphenoxy)-2,4,8,10-tetraoxa-3,9-diphospha [5,5]spiroundecan.

Eine Lichtschutzwirkung geht solchen cyclischen Phosphiten weitgehend ab. Es hat daher nicht an Versuchen gefehlt, durch Einführung von sterisch gehinderten Aminresten, insbesondere von 2,2,6,6,-Tetramethylpiperidinresten, solchen Verbindungen zusätzlich eine Lichtschutzwirkung zu verleihen. So wurden in der DE-OS 2 656 999 cyclische Phosphite der allgemeinen Formel

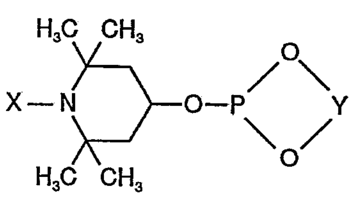

vorgeschlagen, worin X Wasserstoff, Oxyl oder ein einwertiger organischer Rest und Y ein zweiwertiger Rest eines 1,2- oder 1,3-Dioles oder der Rest

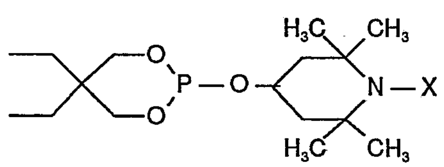

ist. Solche Verbindungen haben zwar eine gute Lichtschutzwirkung, sind jedoch hinsichtlich Lagerstabilität, Hydrolysenempfindlichkeit und Migrationsverhalten unbefriedigend, und auch ihre Wirkung als Verarbeitungsstabilisatoren ist mässig.

Überraschenderweise wurde gefunden, dass hierzu analoge Verbindungen, bei denen der Piperidinrest nicht über Sauerstoff, sondern über Stickstoff an den Phosphor gebunden ist, sowohl eine hervorragende Lichtstabilisierung wie Verarbeitungsstabilisierung bewirken. Auch sind sie in der Wasseraufnahme und Hydrolysenstabilität den Sauerstoff-Analogen überlegen. Vor allem zeigen sie bereits in sehr geringen Konzentrationen eine gute Lichtschutzwirkung.

Aus der DE-A 2 621 870 sind auch schon Phosphorverbindungen bekannt geworden, in denen ein Polyalkylpiperidinrest über Stickstoff an den Phosphor gebunden ist. Das Phosphoratom ist dort allerdings nicht in ein Ringsystem integriert. Diese Verbindungen sind zwar wirkungsvolle Lichtschutzmittel für Polymere, eine Wirkung als Verarbeitungsstabilisatoren fehlt ihnen jedoch.

Gegenstand der Erfindung sind Verbindungen der Formel I oder II,

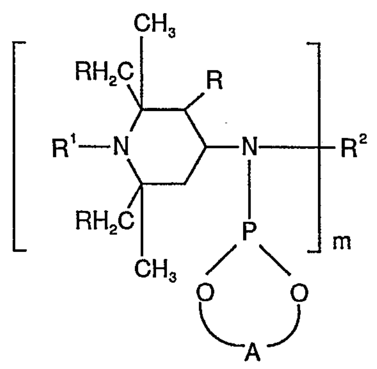

I

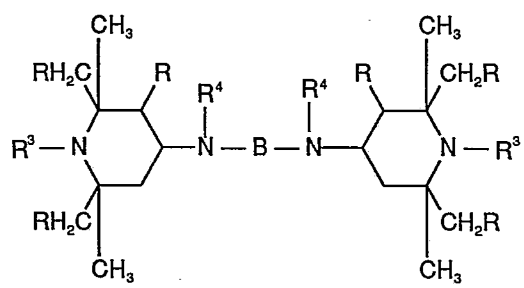

II

worin m 1 oder 2 ist,

A verzweigtes oder unverzweigtes 1,2- oder 1,3-Alkylen mit 2–8 C-Atomen oder o-Phenylen ist,

B eine zweiwertige Gruppe der Formel III oder IIIa ist,

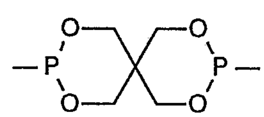

III

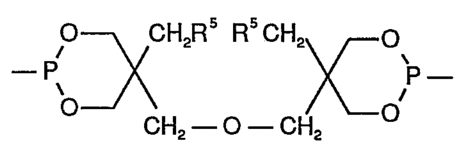

IIIa

R Wasserstoff oder Methyl ist,

$R^1$ Wasserstoff, $C_1$-$C_{12}$-Alkyl, $C_3$-$C_5$-Alkenyl, $C_7$-$C_9$-Aralkyl, $C_2$-$C_{12}$-Alkanoyl, $C_3$-$C_6$-Alkenoyl, Benzoyl oder Cyanomethyl ist,

$R^2$ im Fall von m=1 $C_1$-$C_{20}$-Alkyl, $C_3$-$C_{14}$-Alkoxyal-

kyl, $C_4$-$C_{12}$-Dialkylaminoalkyl, $C_5$-$C_{12}$-Cycloalkyl, $C_7$-$C_9$-Aralkyl, $C_6$-$C_{10}$-Aryl, $C_7$-$C_{20}$-Alkaryl oder eine Gruppe der Formel IV ist,

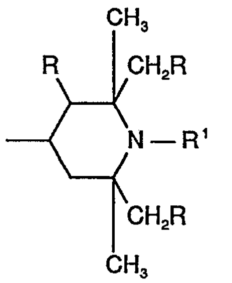

IV

und im Falle von m = 2 $C_2$-$C_{20}$-Alkylen oder durch ein oder mehrere Gruppen -0-, -N($C_1$-$C_4$-Alkyl)- oder

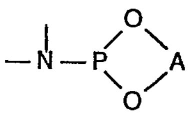

unterbrochenes $C_4$-$C_{12}$-Alkylen, Cyclohexylen, Xylylen, Phenylen oder eine Gruppe Phenylen-Z-Phenylen oder Cyclohexylen-Z-Cyclohexylen ist, worin Z -O-,-$CH_2$- oder -$SO_2$- bedeutet,
$R^3$ Wasserstoff, $C_1$-$C_{12}$-Alkyl, $C_3$-$C_5$-Alkenyl, $C_7$-$C_9$-Aralkyl, $C_2$-$C_{12}$-Alkanoyl, $C_3$-$C_6$-Alkenoyl, Benzoyl oder Cyanomethyl ist,
$R^4$ $C_1$-$C_{20}$-Alkyl, $C_3$-$C_{14}$-Alkoxyalkyl, $C_4$-$C_{12}$-Dialkylaminoalkyl, $C_7$-$C_9$-Aralkyl,$C_6$-$C_{10}$-Aryl, $C_7$-$C_{20}$-Alkaryl, $C_5$-$C_{12}$-Cycloalkyl oder eine Gruppe der Formel IV ist und
$R^5$ Wasserstoff oder Methyl bedeutet.

Die Gruppe A ist eine verzweigte oder unverzweigte 1,2- oder 1,3-Alkylengruppe, die zusammen mit dem Phosphoratom und den beiden Sauerstoffatomen einen 5- oder 8gliedrigen Ring bildet. Unverzweigte Gruppen A können 1,2-Ethylen oder 1,3-Propylen sein, verzweigte Gruppen A können z.B. 1,2-Propylen,1,2-Butylen,Tetramethyl-1,2-ethylen, 2,2-Dimethyl-1,3-propylen, 2-Methyl-2-ethyl-1,3-propylen oder 1,1,3-Trimethyl-1,3-propylen sein. Bevorzugt ist A eine verzweigte 1,2- oder 1,3-Alkylengruppe, insbesondere eine verzweigte 1,3-Alkylengruppe. Besonders bevorzugt sind Verbindungen der Formel I, worin A eine 2,2-Dimethyl-1,3-propylengruppe ist.

$R^1$ und $R^3$ als Alkyl können z.B. Methyl, Ethyl, Propyl, Butyl, Isobutyl, Isoamyl, Hexyl, Octyl, Decyl oder Dodecyl sein. $R^2$ und $R^4$ als Alkyl können darüber hinaus auch z.B. Tetradecyl, Hexadecyl, Octadecyl oder Eikosyl sein. $R^2$ und $R^4$ können auch höhere Alkylgemische sein, wie sie in technischen Fettaminen vorliegen. $R^2$ und $R^4$ als Alkoxyalkyl können z.B. 2-Methoxyethyl, 2-Butoxyethyl, 3-Ethoxypropyl, 3-Methoxypropyl oder 3-Butoxypropyl sein. $R^2$ und $R^4$ als Dialkylaminoalkyl können z.B. 2-Dimethylaminoethyl, 3-Dimethylaminopropyl, 3-Diethylaminopropyl oder 3-Dibutylaminopropyl sein.

$R^1$ und $R^3$ als Alkenyl sind vorzugsweise Alkenylmethyl, wie z.B. Allyl, Methallyl. 2-Butenyl oder 2-Methyl-2-Butenyl. Bevorzugt ist Allyl.

$R^1$, $R^2$, $R^3$ und $R^4$ als Aralkyl können z.B. Benzyl, 2-Phenylethyl, 1-Phenylethyl oder 3-Phenylpropyl sein. Bevorzugt ist Benzyl.

$R^2$ und $R^4$ als Aryl können Phenyl oder Naphtyl sein. $R^2$ und $R^4$ als Alkaryl sind insbesondere Alkylphenyl und können z.B. Tolyl, Xylyl, Ethylphenyl, tert. Butylphenyl, Nonylphenyl, Dodecylphenyl, Methylnaphthyl oder Nonylnaphthyl sein. $R^2$ und $R^4$ als Cycloalkyl können z.B. Cyclopentyl, Cyclohexyl, Cycloheptyl oder Cyclooctyl sein. Bevorzugt ist Cyclohexyl.

$R^1$ und $R^3$ als Alkanoyl oder Alkenoyl können z.B. Acetyl, Propionyl, Butyroyl, Hexanoyl, Octanoyl, Dodecanoyl, Acryloyl, Methacryloyl oder Crotonyl sein. Bevorzugt ist Acetyl.

Im Falle von m = 2 ist $R^2$ ein zweiwertiger Rest und kann z.B. 1,2-Ethylen, Tri-, Tetra-, Hexa-, Octa-, Deca- oder Dodecamethylen, 2,2,4-Trimethylhexamethylen, 2-Methylpentamethylen, 4-Oxa-heptamethylen, 4,7-Dioxa-decamethylen, 4-Isopropylaza-heptamethylen, 3,6-Di-(methylaza)-octamethylen, 1,4-Cyclohexylen, m- oder p-Xylylen, m- oder p-Phenylen, Diphenyloxid-4,4'-diyl, Diphenylmethan-4,4'-diyl, Diphenylsulfon-4,4'-diyl, Dicyclohexylmethan-4,4,'-diyl oder Dicylohexylsulfon-4,4'-diyl sein. Bevorzugt ist $R^2$ als zweiwertiger Rest eine $C_2$-$C_{18}$-, insbesondere eine $C_2$-$C_{10}$-Alkylengruppe.

Bevorzugt sind Verbindungen der Formel I oder II, worin A verzweigtes 1,2- oder 1,3-Alkylen und B eine Gruppe der Formel III ist, R Wasserstoff, $R^1$ Wasserstoff, Methyl, Allyl, Benzyl oder Acetyl ist, $R^2$ $C_1$-$C_{18}$-Alkyl, eine Gruppe der Formel IV oder $C_2$-$C_{10}$-Alkylen ist, $R^3$ Wasserstoff, Methyl, Allyl, Benzyl oder Acetyl ist und $R^4$ $C_1$-$C_{18}$-Alkyl oder eine Gruppe der Formel IV ist.

Besonders bevorzugt sind Verbindungen der Formel I oder II, worin A verzweigtes 1,3-Propylen und B eine Gruppe der Formel III ist, R Wasserstoff ist, $R^1$ und $R^3$ Wasserstoff oder Methyl sind, $R^2$ $C_1$-$C_{12}$-Alkyl, eine Gruppe der Formel IV oder $C_2$-$C_8$-Alkylen ist und $R^4$ $C_1$-$C_{12}$-Alkyl oder eine Gruppe der Formel IV ist, insbesondere solche Verbindungen, worin A eine Gruppe der Formel -CH($R^6$)-C($CH_3$)$_2$-$CH_2$ ist, worin $R^6$ Wasserstoff oder $C_1$-$C_4$-Alkyl bedeutet.

Beispiele für einzelne Verbindungen der Formel I sind:

5,5-Dimethyl-2-[N-ethyl-(2,2,6,6-tetramethyl-4-piperidyl)amino]-1,3,2-dioxaphosphorinan
2-[N-Butyl-(1,2,2,6,6-pentamethyl-4-piperidyl)amino]-5,5-dimethyl-1,3,2-dioxaphosphorinan
5,5-Dimethyl-2-[N-2-ethylhexyl-(2,2,6,6-tetramethyl-4-piperidyl)amino]-1,3,2-dioxaphosphorinan
2-[N-Butyl-(1-allyl-2,2,6,6-tetramethyl-4-piperidyl)amino]-5-ethyl-5-methyl-1,3,2-dioxaphosphorinan
2-[N-Benzyl-(2,2,6,6-tetramethyl-4-piperidyl)amino]-5,5-dimethyl-4-propyl-1,3,2-dioxaphosphorinan

2-[N-(1-Acetyl-2,2,6,6-tetramethyl-4-piperidyl)anilino]-5,5-dimethyl-4-isopropyl-1,3,2-dioxaphosphorinan
2-[N,N-Bis(2,2,6,6-tetramethyl-4-piperidyl)amino]-4,4,6-trimethyl-1,3,2-dioxaphosphorinan
2-[N-Butyl-(2,2,6,6-tetramethyl-4-piperidyl)amino]-5-ethyl-4-propyl-1,3,2-dioxaphosphorinan
2-[N-(1-Acrylyl-2,2,6,6-tetramethyl-4-piperidyl)cyclohexylamino]-4-methyl-1,3,2-dioxaphosphorinan
2-[N-(2-Methoxyethyl)-(2,2,6,6-tetramethyl-4-piperidyl)amino]-1,3,2-dioxaphosphorinan
2-[N-Butyl-(2,6-diethyl-2,3,6-trimethyl-4-piperidyl)amino]-5,5-dimethyl-1,3,2-dioxaphosphorinan
2-[N-Benzyl-(2,6-diethyl-1,2,3,6-tetramethyl-4-piperidyl)amino]-4,4,6-trimethyl-1,3,2-dioxaphosphorinan
2-[N,N-Bis(2,6-diethyl-2,3,6-trimethyl-4-piperidyl)amino]-5,5-dimethyl-1,3,2-dioxaphosphorinan
2-[N-Butyl-(2,2,6,6-tetramethyl-4-piperidyl) amino]-1,3,2-dioxaphospholan
2-[N-Dodecyl-(1,2,6,6-pentamethyl-4-piperidyl)amino]-4-methyl-1,3,2-dioxaphospholan
2-[N-(1-Benzyl-2,2,6,6-tetramethyl-4-piperidyl)octyl-amino]-4-ethyl-1,3,2-dioxaphospholan
2-[N-Benzyl-(2,2,6,6-tetramethyl-4-piperidyl)amino]-4,5-dimethyl-1,3,2-dioxaphospholan
2-[N-(1-Acetyl-2,2,6,6-tetramethyl-4-piperidyl)anilino]-4,4,5,5-tetramethyl-1,3,2-dioxaphospholan
4,5-Diethyl-4,5-dimethyl-2-[N-(2-dimethylaminoethyl)-(2,2,6,6-tetramethyl-4-piperidyl)amino]-1,3,2-dioxaphospholan
2-[N-(2,6-Diethyl-2,3,6-trimethyl-4-piperidyl)dodecylamino]4,4,5,5-tetramethyl-1,3,2-dioxaphospholan
N,N'-Bis(5,5-dimethyl-1,3,2-dioxaphosphorinan-2-yl)-N,N'bis(2,2,6,6-tetramethyl-4-piperidyl)-ethylendiamin
N,N'-Bis(1,2,2,6,6-pentamethyl-4-piperidyl)-N,N'-bis(4,4,6-trimethyl-1,3,2-dioxaphosphorinan-2-yl)-trimethylendiamin
N,N'-Bis(1-allyl-2,2,6,6-tetramethyl-4-piperidyl)-N,N'-bis(5-ethyl-5-methyl-1,3,2-dioxaphosphorinan-2-yl)-hexamethylendiamin
N,N'-Bis(1-benzyl-2,2,6,6-tetramethyl-4-piperidyl)-N,N'-bis(5-ethyl-4-propyl-1,3,2-dioxaphosphorinan-2-yl)-2,2'-diaminodiethylether
N,N''-Bis(2,2,6,6-tetramethyl-4-piperidyl)-N,N',N''-tris(5,5-dimethyl-1,3,2-dioxaphosphorinan-2-yl)-diethylentriamin
1,12-Bis(2,2,6,6-tetramethyl-4-piperidyl)-1,5,8,12-tetrakis(4,4,6-trimethyl-1,3,2-dioxaphosphorinan-2-yl)-1,5,8,12-tetraazadodecan
N,N''-Bis(4-methyl-1,3,2-dioxaphosphorinan-2-yl)-N,N''-bis(2,2,6,6-tetramethyl-4-piperidyl)-N'-methyl-diethylentriamin
N,N'-Bis(4,4,5,5-tetramethyl-1,3,2-dioxaphospholan-2-yl)-N,N'bis(2,2,6,6-tetramethyl-4-piperidyl)-octamethylendiamin
N,N'-Bis(2,6-diethyl-2,3,6-trimethyl-4-piperidyl)-N,N'-bis(4,5-dimethyl-1,3,2,dioxaphospholan-2-yl)-hexamethylendiamin
N,N''-Bis(2,6-diethyl-2,3,6-trimethyl-4-piperidyl)-N,N',N''-tris(5,5-dimethyl-1,3,2-dioxaphosphorinan-2-yl)-diethylentriamin

Beispiele für einzelne Verbindungen der Formel II sind:

3,9-Bis[N-Propyl-(2,2,6,6-tetramethyl-4-piperidyl)amino]-2,4,8,10-tetraoxa-3,9-diphosphaspiro[5,5]undecan
3,9-Bis[N-(1-allyl-2,2,6,6-tetramethyl-4-piperidyl)-N-2-ethylhexylamino]-2,4,8,10-tetraoxa-3,9-diphosphaspiro[5,5]undecan
3,9-Bis[N-(2-dimethylaminoethyl)-1,2,2,6,6-pentamethyl-4-piperidylamino]-2,4,8,10-tetraoxa-3,9-diphosphaspiro[5,5]undecan
3,9-Bis[N-(1-acetyl-2,2,6,6-tetramethyl-4-piperidyl)dodecylamino]-2,4,8,10-tetraoxa-3,9-diphosphaspiro[5,5]undecan
3,9-Bis[N-(2,6-diethyl-2,3,6-trimethyl-4-piperidyl)dodecylamino]-2,4,8,10-tetraoxa-3,9-diphosphaspiro[5,5]undecan
1,3-Bis-[2-(N-bis(1,2,2,6,6-pentamethyl-4-piperidyl)amino)-5-ethyl-1,3,2-dioxaphosphorinan-5-yl]-2-oxapropan
1,3-Bis-[2-(N-(2-methylpropyl)-N-(2,2,6,6-tetramethyl-4-piperidyl)-amino)-5-methyl-1,3,2-dioxaphosphorinan-5-yl]-2-oxapropan
1,3-Bis-[2-(N-(2-ethylhexyl)-N-(2,2,6,6-tetramethyl-4-piperidyl)-amino)-5-ethyl-1,3,2-dioxaphosphorinan-5-yl]-2-oxapropan

Die Verbindungen der Formel I lassen sich nach einer allgemeinen Methode durch Umsetzung eines sekundären Piperidylamines der Formel V mit einem Phosphochloridit der Formel VI herstellen:

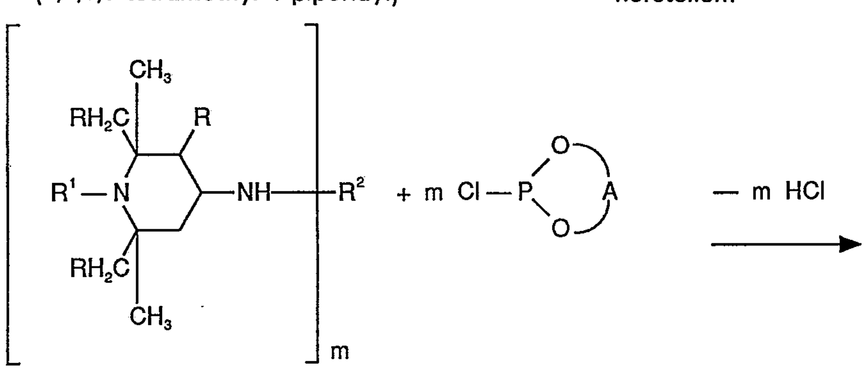


I

V VI

In analoger Weise können die Verbindungen der Formel II durch Umsetzung eines Bis-phosphochloridites Cl-B-Cl mit 2 Mol eines Amines der Formel VII hergestellt werden:

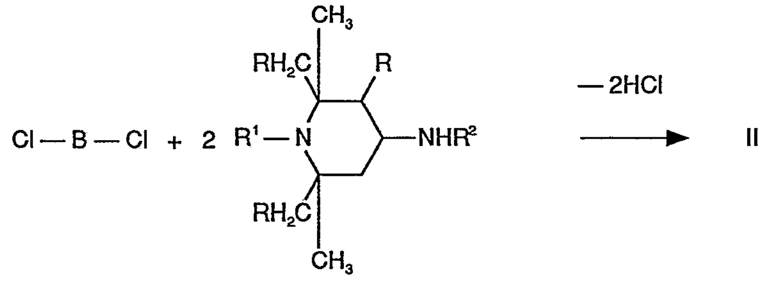


VII

Die Phosphochloridite der Formel VI bzw. Cl-B-Cl und die Amine V bzw. VII sind bekannte Verbindungen. Die Phosphochloridite können aus den entsprechenden Diolen und $PCl_3$ hergestellt werden, wie es z.B. im J. Amer. Chem. Soc. 72 (1950), 5491–7, beschrieben ist. Die Amine werden vorzugsweise aus den entsprechenden 4-Ketopiperidinen durch reduktive Aminierung hergestellt, wie das z.B. in den DE-OS 2 040 975, 2 349 962 und 2 621 870 beschrieben ist.

Zur Umsetzung wird die Verbindung VI bzw. Cl-B-Cl oder dessen Lösung in einem inerten Lösungsmittel zu einer Lösung des Amines V bzw. VII zugegeben. Die Reaktion kann durch Erwärmen vervollständigt werden. Geeignete Lösungsmittel sind z.B. Benzol, Toluol, Xylol, Dioxan, Dimethoxyethan, Methylenchlorid, Ethylacetat, Acetonitril oder Dimethylformamid.

Die Reaktion kann auch ohne Lösungsmittel ausgeführt werden, wenn die Komponenten und das Reaktionsprodukt nicht zu hoch schmelzen. Man arbeitet dann vorzugsweise bei Temperaturen von 100–150°C.

Zur Neutralisation des Chlorwasserstoffes setzt man dem Reaktionsgemisch eine Base in mindestens äquivalenter Menge zu. Dies kann z.B. ein Alkalihydroxid, Erdalkalihydroxid oder -oxid, Ammoniak oder ein tertiäres Amin sein. Man kann das Amin auch als Lösungsmittel verwenden, wozu sich z.B. Triethylamin oder Tributylamin eignen.

Das durch die Neutralisation gebildete Salz kann z.B. durch Filtration oder durch Extraktion mit Wasser aus dem Reaktionsgemisch entfernt werden. Anschliessend destilliert man das Lösungsmittel ab und erhält als Rückstand das rohe Produkt der Formel I bzw. II, das durch übliche Reinigungsmethoden, wie z.B. Umkristallisation oder Säulenchromatographie, gereinigt werden kann.

Anstelle der Phosphochloridite VI bzw. Cl-B-Cl können auch die entsprechenden Phosphoamidite der Formel VIII

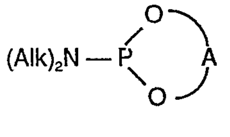

VIII

beziehungsweise $(Alk)_2N$-B-$N(Alk)_2$, worin Alk einen Niederalkylrest bedeutet, verwendet werden. Hierbei benötigt man katalytische Mengen einer Base und arbeitet vorzugsweise ohne Lösungsmittel. Als Katalysator verwendet man starke Basen wie z.B. LiH, NaH, $LiNH_2$. Man arbeitet bevorzugt bei 100–180°C unter gleichzeitigem Abdestillieren des entstehenden Dialkylamines $(Alk)_2NH$.

Anstelle der Phosphochloridite können auch die entsprechenden Alkoxy- oder Aryloxyverbindungen verwendet werden. Die Umsetzung wird dabei wie mit den Phosphoamiditen ausgeführt.

Die Verbindungen der Formel I und II können gemäss der vorliegenden Erfindung als Stabilisatoren für organische Polymere gegen deren Schädigung durch Wärme, Sauerstoff und Licht verwendet werden.

Beispiele für solche Polymere sind:

1. Polymere von Mono- und Diolefinen, beispielsweise Polyethylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen.

2. Mischungen der unter 1) genannten Polymeren, z.B. Mischungen von Polypropylen mit Polyisobutylen.

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere) sowie Terpolymere von Ethylen mit Propylen und einem Dien, wie Hexadien, Dicyclopentadien oder Ethylidennorbornen.

4. Polystyrol, Poly-(p-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Maleinanhydrid, Styrol-Acrylnitril-Methylacrylat; Mischungen von hoher Schlagzähigkeit aus Styrol-Copolymeren und einem anderen Polymer wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylenen,sowie solche Polyoxymethylene, die Comonomere wie z.B. Ethylenoxid enthalten.

13. Polyphenyloxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexa-methylenterephthalamid, Poly-m-phenylen-isophthalamid, sowie deren Block-Copolymere mit Polyethern wie z.B. mit Polyethylenglykol, Polypropylenglykol oder Polytetramethylenglykol.

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen sowie Vinylverbindungen als Vernetzungsmittel ableiten, wie auch deren halogenhaltige, schwer brennbare Modifikationen.

23. Vernetzbare Acrylharze, die sich von substituierten Acrylsäureestern ableiten wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose.

27. Mischungen (Polyblends) der vorgenannten Polymeren wie z.B. PP/EPDM, Polyamid 6/EPDM oder ABS, PVC/EVA, PVC/ABS, PVC/MBS, PC/ABS, PBTP/ABS.

Von besonderer Bedeutung ist die Stabilisierung von Polyolefinen und Styrolpolymerisaten, wie sie in den Abschnitten 1–6 aufgeführt sind.

Die Verbindungen der Formel I und II werden dem Polymeren in einer Konzentration von 0,001 bis 2 Gew.-%, berechnet auf das zu stabilisierende Polymer, zugesetzt. Vorzugsweise werden 0,025 bis 0,2 Gew.-% zugesetzt. Die Einarbeitung in das zu stabilisierende Polymer kann durch Einmischen der Stabilisatoren und gegebenenfalls weiterer Additive nach den in der Technik üblichen Methoden vor oder während der Formgebung des Polymeren geschehen. Die Verbindungen der Formel I und II können auch als Master-

batch, der diese Verbindungen beispielsweise in einer Konzentration von 2,5 bis 25 Gew.-% enthält, den Polymeren zugesetzt werden.

Die Erfindung betrifft daher auch die durch Zusatz von 0,001 bis 2 Gew.-% einer Verbindung der Formel I oder II stabilisierten organischen Polymeren, die gegebenenfalls noch andere in der Technologie der Polymeren übliche Zusätze enthalten können.

Als weitere Additive, mit denen zusammen die erfindungsgemässen Stabilisatoren eingesetzt werden können, sind beispielsweise zu nennen:

1. Antioxidantien
1.1. Alkylierte Monophenole
2,6-Di-tert.butyl-4-methylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

1.2. Alkylierte Hydrochinone
2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

1.3. Hydroxylierte Thiodiphenylether
2,2′-Thio-bis-(6-tert.butyl-4-methylphenol)
2,2′-Thio-bis-(4-octylphenol)
4,4′-Thio-bis-(6-tert.butyl-3-methylphenol)
4,4′-Thio-bis-(6-tert.butyl-2-methylphenol)

1.4. Alkyliden-Bisphenole
2,2′-Methylen-bis-(6-tert.butyl-4-methylphenol)
2,2′-Methylen-bis-(6-tert.butyl-4-ethylphenol)
2,2′-Methylen-bis[4-methyl-6-(α-methylcyclohexyl)-phenol]
2,2′-Methylen-bis-(4-methyl-6-cyclohexylphenol)
2,2′-Methylen-bis-(6-nonyl-4-methylphenol)
2,2′-Methylen-bis-(4,6-di-tert.butylphenol)
2,2′-Ethyliden-bis-(4,6-di-tert.butylphenol)
2,2′-Ethyliden-bis-(6-tert.butyl-4-isobutylphenol)
2,2′-Methylen-bis-[6-(α-methylbenzyl)-4-nonylphenol]
2,2′-Methylen-bis-[6-(α,α-dimethylbenzyl)-4-nonylphenol]
4,4′-Methylen-bis-(2,6-di-tert.butylphenol)
4,4′-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercaptobutan
Ethylenglycol-bis-[3,3-bis-(3′-tert.butyl-4′-hydroxyphenyl)-butyrat]
Di-(3-tert.butyl-4-hydroxy-5-methylphenyl)-dicyclopentadien
Di-[2-(3′-tert.butyl-2′-hydroxy-5′-methyl-benzyl)-6-tert. butyl-4-methyl-phenyl]-terephthalat

1.5. Benzylverbindungen
1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
3,5-Di-tert.butyl-4-hydroxybenzyl-phosphonsäure-monoethylester, Calcium-salz

1.6. Acylaminophenole
4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester

1.7. Ester der β-(3,5-Di-tert.butyl-4-hydroxyphenyl)-propionsäure
mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.8. Ester der β-(5-tert. butyl-4-hydroxy-3-methylphenyl)-propionsäure mit ein- oder mehrwertigen Alkoholen, wie z.B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.9. Amide der β-(3,5-Di-tert. butyl-4-hydroxyphenyl)-propionsäure, wie z.B.
N,N′-Di-(3,5-di-tert.butyl-4-hydroxyphenylpropionyl)-hexamethylendiamin
N,N′-Di-(3,5-di-tert.butyl-4-hydroxyphenylpropionyl)-trimethylendiamin
N,N′-Di-(3,5-di-tert.butyl-4-hydroxyphenylpropionyl)-hydrazin

2. UV-Absorber und Lichtschutzmittel
2.1. 2-(2′-Hydroxyphenyl)-benztriazole, wie z.B.

das 5′-Methyl-, 3′,5′-Di-tert.butyl-, 5′-Tert.butyl-, 5′-(1,1,3,3-Tetramethylbutyl)-, 5-Chlor-3′,5′-di-tert.butyl-, 5-Chlor-3′-tert.butyl-5′-methyl-, 3′-sec.Butyl-5′-tert.butyl-, 4′-Octoxy-, 3′,5′-Di-tert.amyl-, 3′,5′-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2′,4′-Trihydroxy-, 2′-Hydroxy-4,4′-dimethoxy-Derivat.

2.3. Ester von gegebenenfalls substituierten Benzoesäuren, wie z.B. 4-Tert.butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-ß-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin,

2.5. Nickelverbindungen, wie z.B. Nickelkomplexe des 2,2′-Thio-bis-[4-(1,1,3,3-tetramethylbutyl)-phenols], wie der 1:1- oder der 1:2-Komplex, gegebenenfalls mit zusätzlichen Liganden wie n-Butylamin, Triethanolamin oder N-Cyclohexyldiethanolamin, Nickeldibutyl-dithiocarbamat, Nickelsalze von 4-Hydroxy-3,5-di-tert.butylbenzylphosphonsäure-monoalkylestern wie vom Methyl- oder Ethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,2,6,6-tetramethyl-piperidyl)-sebacat Bis-(1,2,2,6,6-pentamethylpiperidyl)-sebacat n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N′-(2,2,6,6-Tetramethyl-4-piperidyl)-hexamethylendiamin und 4-tert.Octylamino-2,6-dichlor-1,3,5-s-triazin,Tris-(2,2,6,6-tetramethyl-4-piperidyl)-nitrilotriacetat,Tetrakis-(2,2,6,6-tetramethyl-4-piperidyl)-1,2,3,4-butantetracarbonsäure, 1,1′-(1,2-Ethandiyl)-bis-(3,3,5,5-tetramethylpiperazinon).

2.7. Oxalsäurediamide, wie z.B. 4,4′-Di-octyloxy-oxanilid, 2,2′-Di-octyloxy-5,5′-di-tert.butyl-oxanilid, 2,2′-Di-dodecyloxy-5,5′-di-tert.butyl-oxanilid, 2-Ethoxy-2′-ethyl-oxanilid, N,N′-Bis-(3-dimethylaminopropyl)-oxalamid, 2-Ethoxy-5-tert.butyl-2′-ethyl-oxanilid und dessen Gemisch mit 2-Ethoxy-2′-ethyl-5,4′-di-tert.butyl-oxanilid, Gemische von ortho- und para-Methoxy- sowie von o- und p-Ethoxy-di-substituierte Oxaniliden.

3. Metalldesaktivatoren, wie z.B. N,N′-Diphenyloxalsäurediamid, N-Salicylal-N′-salicyloylhydrazin, N,N′-Bis-salicyloylhydrazin, N,N′-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert. butylphenyl)-4,4′-biphenylendiphosphonit.

5. Peroxidzerstörende Verbindungen, wie z.B. Ester der β-Thio-dipro-pionsäure, beispielsweise der Lauryl-, Stearyl-, Myristyl- oder Tridecylester, Mercaptobenzimidazol, das Zinksalz des 2-Mercapto-benzimidazols, Zink-dibutyl-dithiocarbamat, Dioctadecyldisulfid, Pentaerythrit-tetrakis-(β-dodecylmercapto)-propionat.

6. Polyamidstabilisatoren, wie. z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon,Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Bei der Mitverwendung solcher Stabilisatoren können synergistische Effekte auftreten. Von besonderer Bedeutung bei Polyolefinen und Styrolpolymerisaten ist die Mitverwendung von Antioxidantien.
Die so stabilisierten Polymeren können in verschiedener Form verwendet werden, z.B. als Folien, Fasern, Bändchen, Profile oder als elastische Formteile.

Die folgenden Beispiele erläutern Herstellung und Verwendung der erfindungsgemässen Verbindungen näher, ohne dass die Erfindung auf die Beispiele beschränkt ist. Darin bedeuten Teile Gewichtsteile und % Gewichts-%. Die darin aufgeführten Temperaturen sind in °C angegeben.

Beispiel 1
18,4 g 2-Chlor-5,5-dimethyl-1,3,2-dioxaphosphorinan werden bei Raumtemperatur unter Rühren zu einer Lösung von 19,7 g (0,1 Mol) 4-Butylamino-1,2,2,6,6-pentamethylpiperidin in 100 ml Triethylamin zugetropft. Nach 15 Stunden Erwärmen auf Rückflusstemperatur wird mit Toluol verdünnt und das ausgefallene Hydrochlorid abfiltriert. Durch Eindampfen des Filtrates erhält man das 2-[N-Butyl-(1,2,2,6,6-pentamethyl-4-piperidyl)amino]-5,5-dimethyl-1,3,2-dioxaphosphorinan als Öl, das bei 40 Pa bei 120° siedet (Verbindung Nr. 1).
In analoger Weise zu Verbindung 1 wird bei Verwendung von 4-Butylamino-2,2,6,6-tetramethylpiperidin das 2-[N-Butyl-(2,2,6,6-tetramethyl-4-piperidyl)amino]-5,5-dimethyl-1,3,2-dioxaphosphorinan als Öl erhalten, welches bei 0,04 Torr bei 100° siedet (Verbindung Nr. 2).
Analyse (344,48)P ber. 8,99%, gef. 9,16%.
In analoger Weise wird bei Verwendung von 21,1 g N,N′-Bis(1,2,2,6,6-pentamethyl-4-piperidyl)hexamethylendiamin das N,N′-Bis(5,5-dimethyl-1,3,2-dioxaphosphorinan-2-yl)-N,N′-bis (1,2,2,6,6-pentamethyl-4-piperidyl)hexamethylendiamin erhalten, das nach Umkristallisation aus Acetonitril bei 103° schmilzt (Verbindung Nr. 3).
Verwendet man als Amin das N,N′-Bis(2,2,6,6-tetramethyl-4-piperidyl)trimethylendiamin, so erhält man bei analoger Verfahrensweise das N,N′-Bis(5,5-dimethyl-1,3,2-dioxaphosphorinan-2-yl)-N,N′-bis(2,2,6,6-tetramethyl-4-piperidyl)-trimethylendiamin, das bei 102° schmilzt (Verbindung Nr. 4).
Analog erhält man bei Verwendung von N,N′-Bis(2,2,6,6-tetramethyl-4-piperidyl)hexamethylendiamin das N,N′-Bis(5,5-dimethyl-1,3,2-dioxaphosphorinan-2-yl)-N,N′-bis(2,2,6,6-tetramethyl-4-piperidyl)hexamethylendiamin vom Schmp. 103° (Verbindung Nr. 5).
In analoger Weise wird bei Verwendung von Bis(2,2,6,6-tetramethyl-4-piperidyl)amin das 5,5-Dimethyl-1,3,2-phosphorinan-2-yl-bis (2,2,6,6-tetramethyl-4-piperidyl)amin erhalten, das bei 156° schmilzt (Verbindung Nr. 6).

Dieselbe Verbindung erhält man auch durch 3stündige Umsetzung von 16,8 g 2-Chlor-5,5-dimethyl-1,3,2-dioxaphosphorinan mit 29,6 g Bis(2,2,6,6-tetramethyl-4-piperidyl)amin ohne Lösungsmittel bei 150°. Nach dem Erkalten wird das Reaktionsgemisch in Toluol aufgenommen, mit wässrigem Ammoniak extrahiert und die Toluollösung eingedampft.

Dieselbe Verbindung erhält man auch durch 15stündige Umsetzung von äquimolaren Mengen 2-Chlor-5,5-dimethyl-1,3,2-dioxaphosphorinan und Bis(2,2,6,6-tetramethyl-4-piperidyl)amin in Toluol unter Rückfluss und anschliessende Spaltung des anfallenden Salzes mit 10%iger wässriger Kalilauge.

Beispiel 1a
Wird in analoger Weise zu Beispiel 1 das 2-Chlor-5,5-dimethyl-4-isopropyl-1,3,2-dioxaphosporinan mit N,N′-Bis(2,2,6,6-tetramethyl-4-piperidyl)hexamethylendiamin umgesetzt, so erhält man N,N′-Bis(5,5-dimethyl-4-isopropyl-1,3,2-dioxaphosphorinan-2-yl)-N,N′-bis(2,2,6,6-tetramethyl-4-piperidyl)hexamethylendiamin vom Schmelzpunkt 95–97° (Verbindung Nr. 7).

Analyse (741,00) P ber. 8,36%, gef. 8,32%.

Analog erhält man aus 2-Chlor-5,5-dimethyl-4-isopropyl-1,3,2-dioxaphosphorinan und Di(2,2,6,6-tetramethyl-4-piperidyl)-amin das 5,5-Dimethyl-4-isopropyl-1,3,2-phosphorinan-2-yl-bis(2,2,6,6-tetramethyl-4-piperidyl)amin vom Smp. 139–141° (Verbindung Nr. 8).

Analyse (469,67) P ber. 6,59%, gef. 6,59%.

Beispiel 2
Eine Lösung von 26,5 g 3,9- Dichlor-2,4,8,10-tetraoxa-3,9-diphosphaspiro[5,5]undecan in 60 ml Xylol wird zu einer Lösung von 59,1 g Bis(2,2,6,6-tetramethyl-4-piperidyl)amin in 120 ml Triethylamin langsam zugetropft. Anschliessend erhitzt man 20 Std. zum Rückfluss, verdünnt mit Xylol, filtriert das Hydrochlorid ab und dampft die Xylollösung ein. Man erhält als Rückstand das 3,9-Bis[bis(2,2,6,6-tetramethyl-4-piperidyl)amino]-2,4,8,10-tetraoxa-3,9-diphosphaspiro[5,5]undecan, das nach Reinigung durch Säulenchromatographie bei 265° schmilzt (Verbindung Nr. 9).

In analoger Weise werden aus 3,9- Dichlor-2,4,8,10-tetraoxa-3,9-di-phosphaspiro[5,5]undecan und den entsprechenden Aminopiperidinen die in Tabelle 1 aufgeführten Verbindungen hergestellt.

Tabelle 1

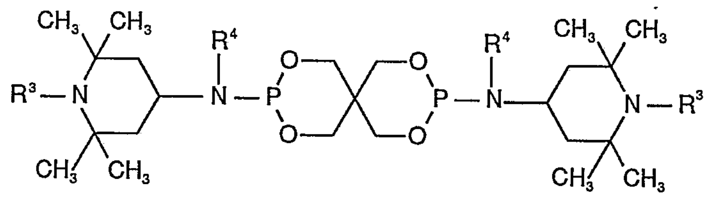

| Verbindung Nr. | $R^3$ | $R^4$ | Eigenschaften |
|---|---|---|---|
| 10 | H | Cyclohexyl | Smp. 184° |
| 11 | H | n-Dodecyl | Öl, Analyse: P ber. 7,37%., gef. 7,27% |
| 12 | H | n-Butyl | Smp. 146° |
| 13 | H | iso-Butyl (2-Methylpropyl) | Smp. 147° |
| 14 | H | n-Octyl | viskoses Harz, Analyse: P ber. 8,49%, gef. 8,50% |
| 15 | H | 2-Ethylhexyl | Öl, Massenspektrum $M^+$ 728($C_{39}H_{78}N_4O_4P_2$) |
| 16 | H | Ethyl | Smp. 134° |
| 17 | H | 2,2-Dimethyl-propyl | Smp. 180–183° P ber. 9,61%, gef. 9,47% |
| 18 | $CH_3$ | n-Butyl | Smp. 148° |
| 19 | $CH_3$ | iso-Butyl | Smp. 131° |
| 20 | $CH_3$ | n-Octyl | viskoses Harz, Analyse: P ber. 8,18%, gef. 7,9% |
| 21 | $CH_3$ | 2-Ethylhexyl | Öl, Analyse P ber. 8,18%, gef. 8,44% |

Beispiel 3

Wird analog Beispiel 2 1,3-Bis(2-Chlor-5-ethyl-1,3,2-dioxaphosphorinan-5-yl)-2-oxapropan mit 4-Butylamino-2,2,6,6-tetramethylpiperidin umgesetzt, so erhält man 1,3-Bis-[2-(N-butyl-N-(2,2,6,6-tetramethyl-4-piperidyl)amino)-5-ethyl-1,3,2-dioxaphosphorinan-5-yl]-2-oxapropan als viskoses Harz (Verbindung Nr. 22, untere Formel, $R^3$ = H); FD-MS: 730 ($M^+$).

Analyse (731,21) P ber. 8,48%, gef. 8,86%.

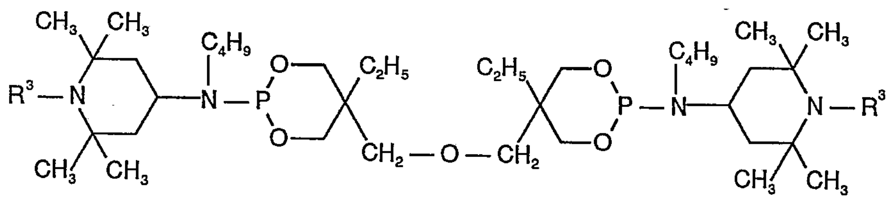

Verwendet man dabei als Amin das 4-Butylamino-1,2,2,6,6-pentamethyl-piperidin, so erhält man bei analoger Verfahrensweise das 1,3-Bis-[2-(N-butyl-(1,2,2,6,6-pentamethyl-4-piperidyl)amino)-5-ethyl-1,3,2-dioxaphosphorinan-5-yl]-2-oxapropan als Harz (Verbindung Nr. 23, obige Formel, $R^3 = CH_3$).

Analyse (759,02) P ber. 8,16%, gef. 8,15%.

Beispiel 4

15 g N-Dodecyl-(1,2,2,6,6-pentamethyl-4-piperidyl)amin und 9,1 g 2-Diethylamino-5,5-dimethyl-1,3,2-dioxaphosphorinan sowie eine katalytische Menge Lithiumhydrid werden im Vakuum (2400 Pa) 3 Std. auf 100° erhitzt. Das Reaktionsgemisch wird im Hochvakuum destilliert. Man erhält das 2-[N-Dodecyl-(1,2,2,6,6-pentamethyl-4-piperidyl)amino]-5,5-dimethyl-1,3,2-dioxaphosphorinan als bei 185°/0,1 Pa siedende Fraktion (Verbindung Nr. 24).

Analyse (470,72) P ber. 6,58%, gef. 6,50%.

Beispiel 5

100 Teile Polyäthylen-Pulver hoher Dichte mit einem Schmelzindex 1,7-2,3 (bei 190°/21,6 kg) werden mit 0,05 Teilen Pentaerythrittetrakis[3-(3,5-ditertiärbutyl-4-hydroxyphenyl)-propionat] und 0,1 Teilen der in der untenstehenden Tabelle angegebenen erfindungsgemässen Verbindungen gemischt und in einem Brabender Plastographen bei 220°C und 50 Umdrehungen pro Minute geknetet. Während dieser Zeit wird der Knetwiderstand als Drehmoment kontinuierlich registriert. Im Verlauf der Knetzeit beginnt das Polymere nach längerer Konstanz zu vernetzen, was anhand der raschen Zunahme des Drehmoments

festgestellt werden kann. In der Tabelle ist die Zeit bis zur merklichen Zunahme des Drehmomentes als Mass der Stabilisatorwirkung angegeben.

Tabelle 2

| Verbindung Nr. | Zeit in Min. |
|---|---|
| 1 | 11 |
| 3 | 15 |
| 4 | 15 |
| 5 | 12 |
| 6 | 19 |
| 10 | 10 |
| 24 | 12 |
| ohne | 5 |

Beispiel 6

100 Teile Polypropylen-Pulver vom Schmelzflussindex 2,3 (bei 230°/2,16 kg) werden mit 0,1 Teil Calciumstearat, mit 0,05 Teilen Pentaerythrit-tetrakis-][3-(3,5-ditertiärbutyl-4-hydroxy-phenyl)-propionat)]und 0,025 oder 0,05 Teilen des in Tabelle 3 angegebenen Stabilisators vermischt.

Diese Gemische werden einerseits 5× hintereinander in einem Einschneckenextruder bei maximal 260°C, andererseits 3× hintereinander im gleichen Extruder bei 280°C extrudiert, in jedem Fall mit 100 Umdrehungen pro Minute. Jeweils nach der 1., 3. und 5., bzw. nach der 1. und 3. Extrusion wird der Schmelzindex des Polymeren gemessen, wobei die Belastung 2160 g, die Temperatur 230°C und die Messgrösse g/10 min. ist. Der Abbau des Polymeren äussert sich in einem Ansteigen des Schmelzindex.

Tabelle 3

| Stabilisator | Schmelzindex nach mehreren Extrusionen | | | | |
|---|---|---|---|---|---|
| | bei 260° | | | bei 280°C | |
| | 1. | 3. | 5. | 1. | 3. |
| keiner | 6,3 | 8,9 | 15,0 | 7,1 | 21,4 |
| 250 ppm Verbindung Nr. 3 | 3,6 | 6,3 | 10,8 | | |
| 500 ppm Verbindung Nr. 3 | 3,2 | 3,7 | 6,0 | | |
| 250 ppm Verbindung Nr. 5 | 3,9 | 6,3 | 9,0 | 4,5 | 7,7 |
| 500 ppm Verbindung Nr. 5 | 3,6 | 4,9 | 7,0 | | |
| 250 ppm Verbindung Nr. 6 | 3,8 | 5,7 | 8,9 | 5,3 | 14,6 |
| 500 ppm Verbindung Nr. 6 | 3,4 | 4,3 | 5,8 | 5,1 | 13,9 |

Beispiel 7

100 Teile Polypropylen-Pulver vom Schmelzindex 2,3 (bei 230°/2,16 kg) werden mit 0,05 Teilen Pentaerythrit-tetrakis-[3-(3,5-ditertiärbutyl-4-hydroxyphenyl)-propionat] und 0,05 Teilen der in der Tabelle angegebenen Verbindung gemischt und in einem Extruder bei 200–220° granuliert. Das granulierte Material wird in einem Extruder mit Breitschlitzdüse zu Folien verarbeitet, die in Bändchen geschnitten werden. Die Folienbändchen werden auf die sechsfache Länge verstreckt. Die so erhaltenen Bändchen sind 2,5 mm breit und 50 µm dick. Die Bändchen werden im Xenotest 1200 belichtet, bis die Reissfestigkeit auf die Hälfte des ursprünglichen Wertes gesunken ist. Diese Belichtungszeit stellt ein Mass für die durch den Stabilisator bewirkte Lichtstabilität dar.

Tabelle 4

| Verbindung Nr. | Belichtungszeit |
|---|---|
| 2 | 2460 h |
| 4 | 3150 h |
| 5 | 2800 h |
| ohne | 630 h |

**Patentansprüche**

1. Verbindungen der Formel I oder II,

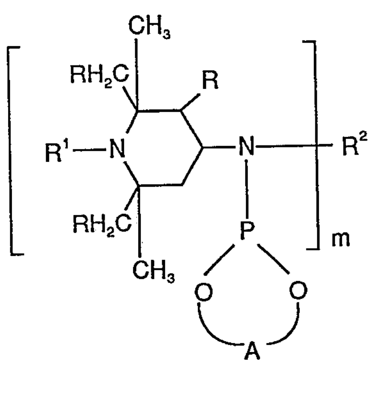

I

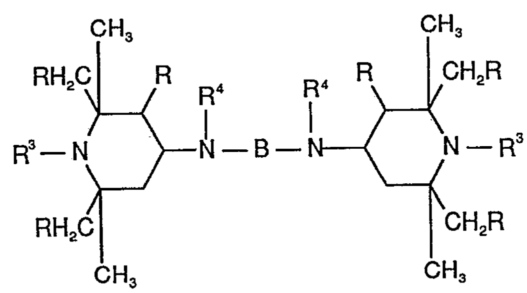

II

worin m 1 oder 2 ist,
A verzweigtes oder unverzweigtes 1,2- oder 1,3-Alkylen mit 2–8 C-Atomen oder o-Phenylen ist,
B eine zweiwertige Gruppe der Formel III oder IIIa ist,

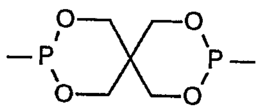

III

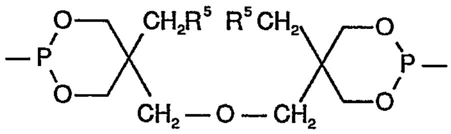

IIIa

R Wasserstoff oder Methyl ist,
$R^1$ Wasserstoff, $C_1$-$C_{12}$-Alkyl, $C_3$-$C_5$-Alkenyl, $C_7$-$C_9$-Aralkyl, $C_2$-$C_{12}$-Alkanoyl, $C_3$-$C_6$-Alkenoyl, Benzoyl oder Cyanomethyl ist,
$R^2$ im Fall von m=1 $C_1$-$C_{20}$-Alkyl, $C_3$-$C_{14}$-Alkoxyalkyl, $C_4$-$C_{12}$-Dialkylaminoalkyl, $C_5$-$C_{12}$-Cycloalkyl, $C_7$-$C_9$-Aralkyl, $C_6$-$C_{10}$-Aryl, $C_7$-$C_{20}$-Alkaryl oder eine Gruppe der Formel IV ist,

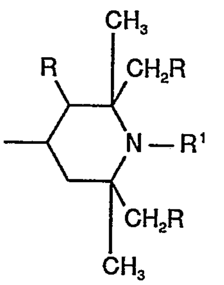

IV

und im Falle von m=2 $C_2$-$C_{20}$-Alkylen oder durch ein oder mehrere der Gruppen -0-, -N($C_1$-$C_4$-Alkyl)- oder

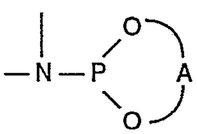

unterbrochenes $C_4$-$C_{12}$-Alkylen, Cyclohexylen, Xylylen, Phenylen oder eine Gruppe Phenylen-Z-Phenylen oder Cyclohexylen-Z-Cyclohexylen ist, worin Z -O-, -$CH_2$- oder -$So_2$- bedeutet,
$R^3$ Wasserstoff, $C_1$-$C_{12}$-Alkyl, $C_3$-$C_5$-Alkenyl, $C_7$-$C_9$-Aralkyl, $C_2$-$C_{12}$-Alkanoyl, $C_3$-$C_6$-Alkenoyl, Benzoyl oder Cyanomethyl ist,
$R^4$ $C_1$-$C_{20}$-Alkyl, $C_3$-$C_{14}$-Alkoxyalkyl, $C_4$-$C_{12}$-Dialkylaminoalkyl, $C_7$-$C_9$-Aralkyl, $C_6$-$C_{10}$-Aryl, $C_7$-$C_{20}$-Alkaryl, $C_5$-$C_{12}$-Cycloalkyl oder eine Gruppe der Formel IV ist und
$R^5$ Wasserstoff oder Methyl bedeutet.

2. Verbindungen der Formel I oder II gemäss Anspruch 1, worin A verzweigtes 1,2- oder 1,3-Alkylen und B eine Gruppe der Formel III ist, R Wasserstoff ist, $R^1$ Wasserstoff, Methyl, Allyl, Benzyl oder Acetyl ist, $R^2$ $C_1$-$C_{18}$-Alkyl, eine Gruppe der Formel IV oder $C_2$-$C_{10}$-Alkylen ist, $R^3$ Wasserstoff, Methyl, Allyl, Benzyl oder Acetyl ist und $R^4$ $C_1$-$C_{18}$-Alkyl oder eine Gruppe der Formel IV ist.

3. Verbindungen der Formel I oder II gemäss Anspruch 1, worin A verzweigtes 1,3-Propylen und B eine Gruppe der Formel III ist, R Wasserstoff ist, $R^1$ und $R^3$ Wasserstoff oder Methyl sind $R^2$ $C_1$-$C_{12}$-Alkyl, eine Gruppe der Formel IV oder $C_2$-$C_8$-Alkylen ist und $R^4$ $C_1$-$C_{12}$-Alkyl oder eine Gruppe der Formel IV ist.

4. Verbindungen der Formel I oder II gemäss Anspruch 3, worin A eine Gruppe der Formel -CH($R^6$)-C($CH_3$)$_2$-$CH_2$- ist, worin $R^6$ Wasserstoff oder $C_1$-$C_4$-Alkyl bedeutet.

5. Die Verbindung gemäss Anspruch 1 der Formel

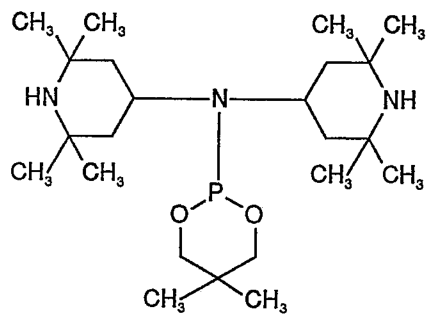

6. Stabilisiertes organisches Polymer enthaltend 0,005 bis 5 Gew.% mindestens einer Verbindung gemäss Anspruch 1.

7. Verwendung von Verbindungen der Formel I oder II gemäss Anspruch 1 als Stabilisatoren für organische Polymere.

8. Verwendung gemäss Anspruch 7 als Stabilisatoren für Polyolefine und Styrolpolymerisate.

## Claims

1. Compounds of the formula I or II

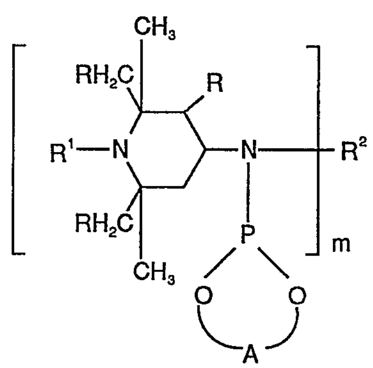

I

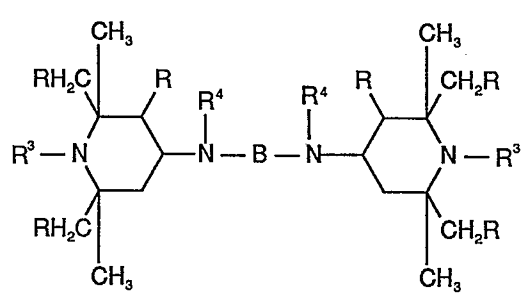

II

wherein m is 1 or 2, A is branched or unbranched 1,2- or 1,3-alkylene having 2-8 C atoms, or o-phenylene, B is a divalent group of the formula III or IIIa

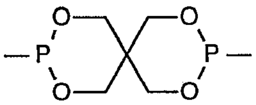

III

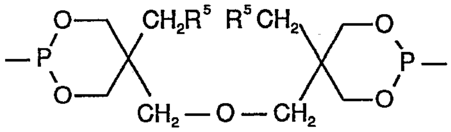

IIIa

R is hydrogen or methyl, $R^1$ is hydrogen, $C_1$-$C_{12}$alkyl, $C_3$-$C_5$alkenyl, $C_7$-$C_9$aralkyl, $C_2$-$C_{12}$alkanoyl, $C_3$-$C_6$alkenoyl, benzoyl or cyanomethyl, $R^2$, in the case where m = 1, is $C_1$-$C_{20}$alkyl, $C_3$-$C_{14}$alkoxyalkyl, $C_4$-$C_{12}$dialkylaminoalkyl, $C_5$-$C_{12}$cycloalkyl, $C_7$-$C_9$aralkyl, $C_6$-$C_{10}$aryl, $C_7$-$C_{20}$alkaryl or a group of the formula IV

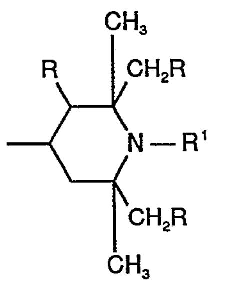

IV

and, in the case where m = 2, is $C_2$-$C_{20}$alkylene, $C_4$-$C_{12}$alkylene interrupted by one or more groups -O-, -N($C_1$-$C_4$alkyl)- or

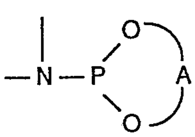

cyclohexylene, xylylene, phenylene, or a group phenylene-Z-phenylene or cyclohexylene-Z-cyclohexylene, wherein Z is -O-, $-CH_2-$ or $-SO_2-$, $R^3$ is hydrogen, $C_1$-$C_{12}$alkyl, $C_3$-$C_5$alkenyl, $C_7$-$C_9$aralkyl, $C_2$-$C_{12}$alkanoyl, $C_3$-$C_6$alkenoyl, benzoyl or cyanomethyl, $R^4$ is $C_1$-$C_{20}$alkyl, $C_3$-$C_{14}$-alkoxyalkyl,$C_4$-$C_{12}$dialkylaminoalkyl, $C_7$-$C_9$aralkyl, $C_6$-$C_{10}$aryl,$C_7$-$C_{20}$alkaryl, $C_5$-$C_{12}$cycloalkyl or a group of the formula IV, and $R^5$ is hydrogen or methyl.

2. Compounds of the formula I or II according to claim 1, wherein A is branched 1,2- or 1,3-alkylene, B is a group of the formula III, R is hydrogen, $R^1$ is hydrogen, methyl, allyl, benzyl or acetyl, $R^2$ is $C_1$-$C_{18}$alkyl, a group of the formula IV or $C_2$-$C_{10}$alkylene, $R^3$ is hydrogen, methyl, allyl, benzyl or acetyl and $R^4$ is $C_1$-$C_{18}$alkyl or a group of the formula IV.

3. Compounds of the formula I or II according to claim 1, wherein A is branched 1,3propylene, B is a group of the formula III, R is hydrogen, $R^1$ and $R^3$ are hydrogen or methyl, $R^2$ is $C_1$-$C_{12}$alkyl, a group of the formula IV or $C_2$-$C_8$alkylene and $R^4$ is $C_1$-$C_{12}$alkyl or a group of the formula IV.

4. Compounds of the formula I or II according to claim 3, wherein A is a group of the formula $-CH(R^6)-C(CH_3)_2-CH_2$, wherein $R^6$ is hydrogen or $C_1$-$C_4$alkyl.

5. The compound according to claim 1 of the formula

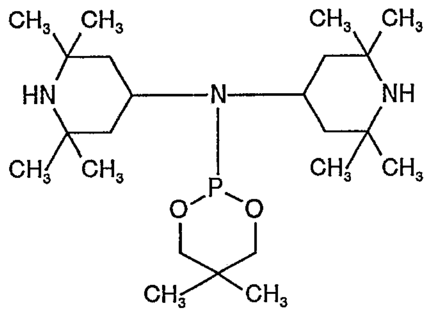

6. A stabilized organic polymer containing 0.005 to 5% by weight of at least one compound according to claim 1.

7. The use of compounds of the formula I or II according to claim 1 as stabilizers for organic polymers.

8. The use according to claim 7 as stabilizers for polyolefines and styrene polymers.

**Revendications**

1. Composés répondant à l'une des formules I et

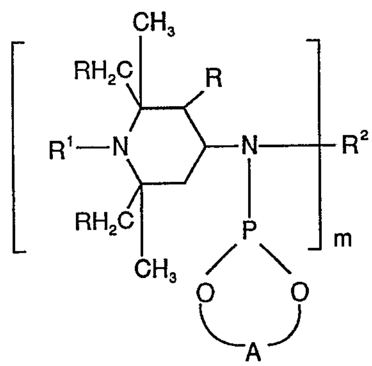

I

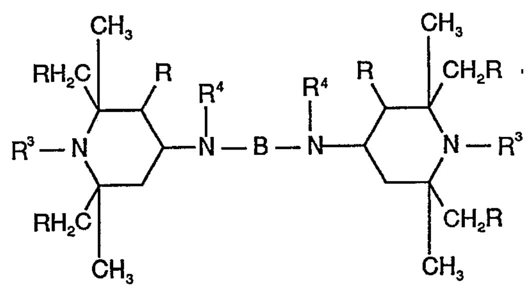

II

II: dans lesquelles

m est égal à 1 ou à 2,

A représente un radical alkylène-1,2 ou -1,3, ramifié ou non, qui contient de 2 à 8 atomes de carbone, ou représente un radical o-phénylène,

B représente un radical bivalent répondant à l'une des formules III et IIIa,

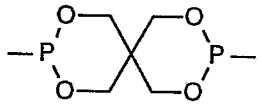

III

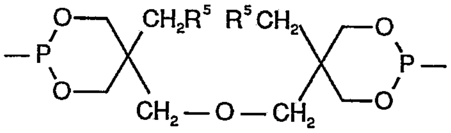

IIIa

R représente l'hydrogène ou un méthyle,

$R^1$ représente l'hydrogène, un alkyle en $C_1$-$C_{12}$, un alcényle en $C_3$-$C_5$, un aralkyle en $C_7$-$C_9$, un alcanoyle en $C_2$-$C_{12}$, un alcénoyle en $C_3$-$C_6$, un benzoyle ou un cyanométhyle,

$R^2$ représente:

- dans le cas où m est égal à 1, un alkyle en $C_1$-$C_{20}$, un alcoxyalkyle en $C_3$-$C_{14}$, un dialkylamino-alkyle en $C_4$-$C_{12}$, un cycloalkyle en $C_5$-$C_{12}$, un aralkyle en $C_7$-$C_9$, un aryle en $C_6$-$C_{10}$, un alkylaryle en $C_7$-$C_{20}$ ou un radical de formule IV:

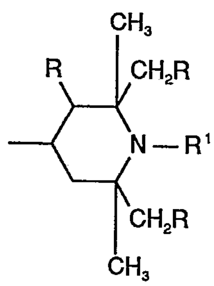

IV

et

- dans le cas où m est égal à 2, un alkylène en $C_2$-$C_{20}$, un alkylène en $C_4$-$C_{12}$ interrompu par un ou plusieurs radicaux -O-, -N($C_1$-$C_4$-alkyl)- ou

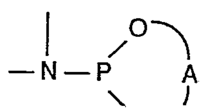

un cyclohexylène, un xylylène, un phénylène, un phénylène-Z-phénylène ou un cyclohexylène-Z-cyclohexylène, le symbole Z, dans ces deux derniers radicaux, représentant -O-, $-CH_2-$ ou $-SO_2-$,

$R^3$ représente l'hydrogène, un alkyle en $C_1$-$C_{12}$, un alcényle en $C_3$-$C_5$, un aralkyle en $C_7$-$C_9$, un alcanoyle en $C_2$-$C_{12}$, un alcénoyle en $C_3$-$C_6$, un benzoyle ou un cyanométhyle,

$R^4$ représente un alkyle en $C_1$-$C_{20}$, un alcoxyalkyle en $C_3$-$C_{14}$, un dialkylaminoalkyle en $C_4$-$C_{12}$, un aralkyle en $C_7$-$C_9$, un aryle en $C_6$-$C_{10}$, un alkylaryle en $C_7$-$C_{20}$, un cycloalkyle en $C_5$-$C_{12}$ ou un radical de formule IV, et

$R^5$ représente l'hydrogène ou un méthyle.

2. Composés de formule I ou II dans lesquels A représente un radical alkylène-1,2 ou -1,3 ramifié, B un radical de formule III, R l'hydrogène, $R^1$ l'hydrogène ou un radical méthyle, allyle, benzyle ou acétyle, $R^2$ un alkyle en $C_1$-$C_{18}$, un radical de formule IV ou un alkylène en $C_2$-$C_{10}$, $R^3$ l'hydrogène ou un radical méthyle, allyle, benzyle ou acétyle et $R^4$ un alkyle en $C_1$-$C_{18}$ ou un radical de formule IV.

3. Composés de formule I ou II selon la revendication 1 dans lesquels A représente un radical propylène-1,3 ramifié, B un radical de formule III, R l'hydrogène, $R^1$ et $R^3$ représentent chacun l'hydrogène ou un méthyle, $R^2$ représente un alkyle en $C_1$-$C_{12}$, un radical de formule IV ou un alkylène en $C_2$-$C_8$ et $R^4$ un alkyle en $C_1$-$C_{12}$ ou un radical de formule IV.

4. Composés de formule I ou II selon la revendication 3 dans lesquels A représente un radical répondant à la formule I $-CH(R^6)-C(CH_3)_2-CH_2-$ dans laquelle $R^6$ représente l'hydrogène ou un alkyle en $C_1$-$C_4$.

5. Composé selon la revendication 1, en l'espèce celui qui répond à la formule:

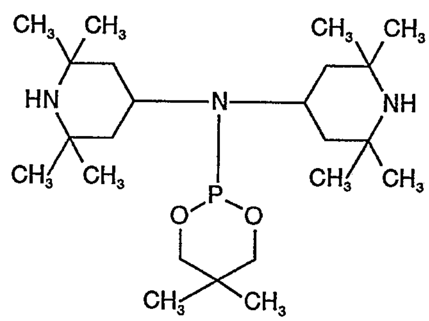

6. Polymère organique stabilisé qui contient de 0,005 à 5% en poids d'au moins un composé selon la revendication 1.

7. Application de composés de formule I ou II selon la revendication 1 comme stabilisants pour des polymères organiques.

8. Application selon la revendication 7 selon laquelle les composés sont utilisés comme stabilisants pour des polyoléfines et pour des polymères du styrène.